# EUROPEAN PATENT APPLICATION

(11) **EP 4 534 611 A1**
(43) Date of publication of application: **09.04.2025**
(21) Application number: 24196582.1
(22) Date of filing: 27.08.2024
(51) Int. Cl.: C09C 1/00

(54) **EFFECT PIGMENT REALIZING THE SAME COLOR AT DIFFERENT VIEW ANGLES AND METHOD FOR PREPARING THE SAME**

(30) Priority: 05.10.2023 KR 20230132682
(71) Applicant: Cqv Co., Ltd., Jincheon-gun, Chungcheongbuk-do 27845 (KR)
(72) Inventor: CHO, Kum-Sung, 27735 Cheongju-si (KR); JEONG, Jae-Il, 28325 Cheongju-si (KR); KANG, Kwang-Choong, 28325 Cheongju-si (KR); CHOI, Byung-Ki, 28123 Cheongju-si (KR); LIM, Kwang-Su, 28315 Cheongju-si (KR)
(74) Representative: HGF

(57) **Abstract**

Disclosed are an effect pigment that realizes substantially the same color at different view angles and a method for preparing the same. The effect includes a platelet-shaped substrate; and a pigment particle layer composed of pigment particles attached to at least a portion of a surface of the platelet-shaped substrate, wherein the pigment particles of the pigment particle layer are discontinuously positioned on the surface of the platelet-shaped substrate in an island manner.

## Description

### BACKGROUND

### Field

The present disclosure relates to an effect pigment and a method for preparing the same, and more specifically, to a novel effect pigment which realizes the same color even at different view angles, and method for preparing the same.

### Description of Related Art

Effect pigments are used in various fields of industry, especially in the fields of automobiles, decorative coatings, plastics, paints, printing inks, and cosmetic formulations.

The effect pigments may realize various colors, such as bright colors such as red, gold, and pearl colors, and dark colors such as black, depending on types thereof.

In particular, effect pigments used in the art have an effect in which color deviation is prominent depending on a varying viewing angle. When the color deviation depending on the varying viewing angle is large, the aesthetics may not be good because the color changes depending on the varying viewing angle.

In particular, when a white series effect pigment such as a pearlescent pigment has a large color deviation depending on the varying viewing angle, it may realize a dark color rather than a white color at a certain viewing angle.

Accordingly, a novel effect pigment that may maintain a uniform color without a large color deviation depending on the varying viewing angle is required.

### SUMMARY

A purpose of the present disclosure is to provide a novel effect pigment that may maintain a substantially uniform color without a large color deviation depending on a varying viewing angle and a method for preparing the same.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

In order to achieve the above purpose, an effect pigment according to one aspect of the present disclosure includes a platelet-shaped substrate; and a pigment particle layer composed of pigment particles attached to at least a portion of a surface of the platelet-shaped substrate, wherein the pigment particles of the pigment particle layer are discontinuously positioned on the surface of the platelet-shaped substrate in an island manner.

According to some embodiments of the effect pigment, the pigment particle includes at least one of a metal oxide, ZnS, and BaSO₄.

According to some embodiments of the effect pigment, the metal oxide includes TiO₂.

According to some embodiments of the effect pigment, the platelet-shaped substrate is made of a plate-shaped material including at least one of synthetic mica, natural mica, glass flake, plate-shaped glass, plate-shaped iron oxide, plate-shaped alumina, plate-shaped silica, plate-shaped aluminum, and plate-shaped TiO₂.

According to some embodiments of the effect pigment, a content of the pigment particles is in a range of 1 to 20 wt% based on 100 wt% of a total weight of the effect pigment.

According to some embodiments of the effect pigment, a standard deviation of hue values respectively measured at -15°, 15°, 25°, 45°, 75°, and 110° is 10 or smaller.

In order to achieve the above purpose, a method for preparing an effect pigment according to another aspect includes (a) a step of preparing an organic binder solution containing pigment particles; (b) a step of mixing platelet-shaped substrates with a solvent to prepare a mixture and then stirring and dispersing the mixture to prepare a substrate suspension; and (c) a step of mixing the substrate suspension and the organic binder solution with each other to coat the pigment particles on a surface of the platelet-shaped substrates.

According to some embodiments of the method, the step (a) includes: (a1) a step of adding the pigment particles to the organic binder solution; and (a2) a step of pulverizing the pigment particles to prepare the organic binder solution containing the pulverized pigment particles.

According to some embodiments of the method, the step (a) includes: (a1') a step of pulverizing the pigment particles; and (a2') a step of adding the pulverized pigment particles into the organic binder solution to prepare the organic binder solution containing the pulverized pigment particles.

According to some embodiments of the method, the organic binder solution further contains a dispersant and a defoamer.

According to some embodiments of the method, the pigment particle includes at least one of a metal oxide, ZnS, and BaSO₄.

According to some embodiments of the method, the metal oxide includes TiO₂.

According to some embodiments of the method, the platelet-shaped substrate is made of a plate-shaped material including at least one of synthetic mica, natural mica, glass flake, plate-shaped glass, plate-shaped iron oxide, plate-shaped alumina, plate-shaped silica, plate-shaped aluminum, and plate-shaped TiO₂.

According to some embodiments of the method, the method further comprises, after step the (c), (d) a step of washing and dehydrating the platelet-shaped substrates; (e) a step of drying the washed platelet-shaped substrate; and (f) a step of screening the substrates of a size larger than a predetermined size among the dried platelet-shaped substrates.

According to some embodiments of the method, the pigment particles are contained in an amount of 1 to 20 wt% based on 100 wt% of a total weight of the effect pigment.

The effect pigment according to the present disclosure may maintain a uniform color without a large color deviation depending on the varying viewing angle due to the pigment particles attached to the platelet-shaped substrate and discontinuously positioned on the surface of the platelet-shaped substrate in the island manner.

Accordingly, the effect pigment of the present disclosure may realize substantially the same color at various viewing angles.

Effects of the present disclosure are not limited to the effects mentioned above, and other effects not mentioned will be clearly understood by those skilled in the art from the description below.

In addition to the above effects, specific effects of the present disclosure are described together while describing specific details for carrying out the present disclosure.

### BRIEF DESCRIPTION OF DRAWINGS

FIG. 1 and FIG. 2 are SEM photographs showing an effect pigment according to the present disclosure.
FIG. 2 is a flow chart showing a process for preparing the effect pigment according to the present disclosure.

### DETAILED DESCRIPTIONS

Advantages and features of the present disclosure, and a method of achieving the advantages and features will become apparent with reference to embodiments described later in detail together with the accompanying drawings. However, the present disclosure is not limited to the embodiments as disclosed under, but may be implemented in various different forms. Thus, these embodiments are set forth only to make the present disclosure complete, and to completely inform the scope of the present disclosure to those of ordinary skill in the technical field to which the present disclosure belongs, and the present disclosure is only defined by the scope of the claims.

Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof.

In descriptions of temporal relationships, for example, temporal precedent relationships between two events such as "after", "subsequent to", "before", etc., another event may occur therebetween unless "directly after", "directly subsequent" or "directly before" is not indicated.

When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "embodiments," "examples," "aspects, and the like should not be construed such that any aspect or design as described is superior to or advantageous over other aspects or designs.

Further, the term 'or' means 'inclusive or' rather than 'exclusive or'. That is, unless otherwise stated or clear from the context, the expression that 'x uses a or b' means any one of natural inclusive permutations.

The terms used in the description below have been selected as being general and universal in the related technical field. However, there may be other terms than the terms depending on the development and/or change of technology, convention, preference of technicians, etc. Therefore, the terms used in the description below should not be understood as limiting technical ideas, but should be understood as examples of the terms for illustrating embodiments.

Unless otherwise specified, all numbers, values, and/or expressions expressing quantities of components as used herein are approximations that reflect, among other things, the various uncertainties of measurement that arise in obtaining such values and the numbers, and therefore should be understood to be modified in all instances by the term "about." Furthermore, where a numerical range is disclosed herein, the numerical range is continuous and includes all values in a range from the minimum value to the maximum value, including the minimum value and the maximum value, unless otherwise indicated. Furthermore, where the numerical range refers to an integer, all integers in a range from the minimum value to the maximum value, including the minimum value and the maximum value are included in the numerical range, unless otherwise specified.

Hereinafter, the effect pigment according to some embodiments of the present disclosure and the method for preparing the same are described in detail.

### Effect pigment

First, the effect pigment of the present disclosure is described in detail.

The effect pigment of the present disclosure includes a platelet-shaped substrate, and a pigment particle layer composed of pigment particles attached to at least a portion of a surface of the platelet-shaped substrate, wherein the pigment particles of the pigment particle layer are discontinuously positioned on the surface of the platelet-shaped substrate in an island manner.

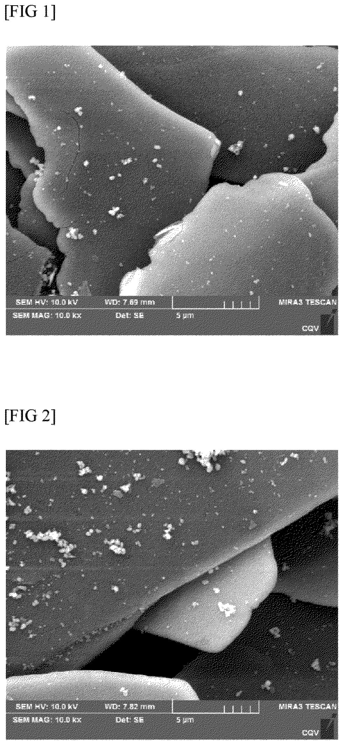

Referring to FIG. 1 and FIG. 2, I may be identified that the effect pigment of the present disclosure has the pigment particles attached to the surface of the platelet-shaped substrate.

In this regard, the pigment particles are discontinuously positioned on the surface of the platelet-shaped substrate in the island manner. In the present disclosure, a collection of the pigment particles is defined as the pigment particle layer.

As described above, the effect pigment of the present disclosure has the pigment particles attached to the surface of the platelet-shaped substrate, and the pigment particles are discontinuously positioned on the surface of the platelet-shaped substrate in the island manner. Accordingly, the effect pigment of the present disclosure exhibits an effect with the color deviation depending on the varying viewing angle is small.

The platelet-shaped substrate used for the effect pigment of the present disclosure is not particularly limited in terms of a type thereof. In one example, a plate shaped material including at least one of synthetic mica, natural mica, glass flake, plate-shaped glass, plate-shaped iron oxide, plate-shaped alumina, plate-shaped silica, plate-shaped aluminum, and plate-shaped TiO₂.

Next, the effect pigment of the present disclosure includes the pigment particle layer composed of the pigment particles attached to at least a portion of the surface of the platelet-shaped substrate.

As described above, as used herein, the collection of the pigment particles refers to the pigment particle layer.

Preferably, the pigment particle may include at least one of metal oxides, ZnS, and BaSO₄, or may include organic pigments.

In this regard, the effect pigment of the present disclosure may include TiO₂ as a preferable example of the metal oxide. In this case, the effect pigment of the present disclosure may realize a white color.

In addition, the TiO₂ particle as the pigment particle is attached to the surface of the platelet-shaped substrate, such that the effect pigment of the present disclosure has a small color deviation in the white color depending on the varying viewing angle. In other words, the effect pigment of the present disclosure realizes substantially the same white color at different viewing angles.

Preferably, the pigment particle may have an average particle diameter of 500 nm or smaller. More preferably, the pigment particle may have an average particle diameter of 100 to 300 nm. When the average particle diameter of the pigment particle exceeds 500 nm, the pigment particle may not be well attached to the surface of the platelet-shaped substrate and the pigment particles may clump together. Accordingly, when the average particle diameter of the pigment particle exceeds 500 nm, the pigment particle layer may not be formed on the surface of the platelet-shaped substrate and a standard deviation of a hue value described below may rather increase.

Preferably, the pigment particles may be contained in an amount of 1 to 20 wt% based on 100 wt% of a total weight of the effect pigment.

When the pigment particles are contained in an amount smaller than 1 wt%, a coating amount of the pigment particle layer may be small, thereby increasing the color deviation of the pigment. On the other hand, when the pigment particles are contained in an amount greater than 20 wt%, the coating amount of the pigment particle layer may increase, thereby increasing the color deviation of the pigment.

The effect pigment of the present disclosure preferably has a standard deviation of hue values measured at -15°, 15°, 25°, 45°, 75°, and 110° in a range of 10 or smaller, more preferably, 8 or smaller, and most preferably 5 or smaller.

When the standard deviation of the hue value exceeds 10, the color deviation depending on the varying viewing angle becomes very large, so that different colors are realizes depending on the varying viewing angle.

In the present disclosure, the hue value refers to a value measured as follows. A paint is prepared by mixing pigments and a resin for film formation with each other and dispersing the mixture, and the paint is drawn down using a coating machine, dried at room temperature, such that a specimen is prepared. A color difference value of the specimen is analyzed 10 times using a colorimeter (MAC i from BYK), and an average value thereof is calculated to measure the hue value.

In this regard, the resin for film formation may be a resin generally used in the art, and an acrylic resin (product name Na clear) may be used as an example thereof.

The effect pigment according to the present disclosure as described above has pigment particles attached to the surface of the platelet-shaped substrate, and the pigment particles are discontinuously positioned on the surface of the platelet-shaped substrate in the island manner.

Accordingly, the effect pigment of the present disclosure exhibits little color deviation depending on the varying viewing angle.

The product to which the effect pigment according to the present disclosure is applied may have any one of following forms: automotive paint, general paint, coating, powder coating, printing ink, coating composition, plastic, adhesive, paper stock, building material, rubber composition, and cosmetic composition. The effect pigment may be contained in a content range of 0.01 to 30 wt % based on a total weight of the product.

### Method for preparing the effect pigment

Hereinafter, a method for preparing the effect pigment according to another embodiment of the present disclosure is described in detail.

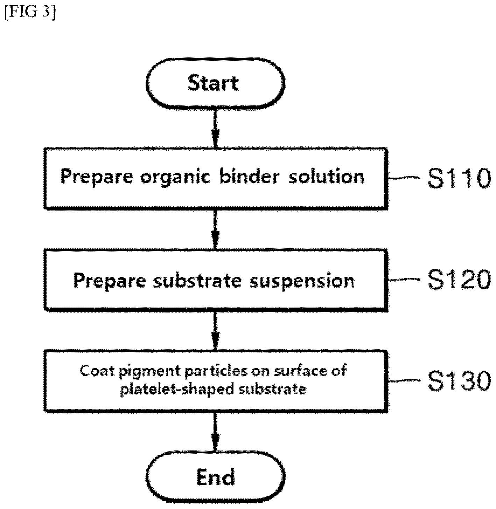

FIG. 3 is a flow chart showing a method for preparing the effect pigment according to an embodiment of the present disclosure.

Referring to FIG. 3, the method for preparing the effect pigment according to the present disclosure includes (a) a step of preparing an organic binder solution containing pigment particles in S110; (b) a step of mixing platelet-shaped substrates with a solvent, and stirring and dispersing the mixture to prepare a substrate suspension in S120; and (c) a step of mixing the substrate suspension and the organic binder solution with each other to coat the pigment particles on the surface of the platelet-shaped substrate in S130.

First, the step (a) in S110 is a step of preparing the organic binder solution containing the pigment particles.

The organic binder solution used in the step (a) in S110 may contain an organic binder resin including at least one of cellulose, cellulose acetate, polyamide, epoxy resin, polyester, melamine resin, polyurethane, resin vinyl resin, silicon resin, acrylic acid ester, methacrylic acid ester, styrene, ethylene, propylene, acrylic resin, polymers or copolymers of derivatives thereof. However, the organic polymer resin used in the present disclosure is not particularly limited to the above examples.

In the organic binder solution, the organic polymer resin may be contained in an amount of 5 to 50 parts by weight relative based on 100 parts by weight of the organic binder solution. When the content of the organic polymer resin is smaller than 5 parts by weight, the required resin adhesion may not be obtained. On the other hand, when the content of the organic polymer resin exceeds 50 parts by weight, the content of the organic polymer resin relative to an amount of the binder resin is too high, thereby causing aggregation of particles or substrates.

The pigment particle used in the present disclosure may be used without any special restrictions thereto as long as a target color is realized.

In one example, the pigment particle may include at least one of metal oxides, ZnS, and BaSO₄, or may include other organic pigments.

In this regard, the effect pigment of the present disclosure may include TiO₂ as a preferred example of the metal oxide to realize a white color.

The pigment particle may be contained in an amount of 5 to 60 parts by weight relative to 100 parts by weight of the organic binder solution. When the pigment particles are contained in a content smaller than 5 parts by weight, an amount of a sum of the organic polymer resin and the binder resin is relatively larger, compared to the amount of the pigment particles, thereby reducing binding efficiency. On the other hand, when the pigment particles are contained in a content greater than 60 parts by weight, the amount of the sum of the organic polymer resin and the binder resin is relatively smaller compared to the amount of the pigment particles, such that the required binding effect is not achieved.

Furthermore, the organic binder solution may further include a dispersant and a defoamer as needed.

The dispersant may be a dispersant known in the relevant technical field without limitation thereto, and may be contained in a content of 1 to 5 parts by weight relative to 100 parts by weight of the organic binder solution. When the dispersant is contained in a content smaller than 1 part by weight, the required dispersion effect may not be obtained. However, when the dispersant is contained in a content greater than 5 parts by weight, a concentration of the dispersant may be too high, thereby causing decrease in dispersion efficiency.

The defoamer may employ a defoamer known in the relevant technical field without limitation thereof, and may be contained in a content of 1 to 5 parts by weight relative to 100 parts by weight of the organic binder solution. When the defoamer is contained in an amount smaller than 1 part by weight, the required defoaming the effect may not be obtained. To the contrary, when the defoamer is contained in an amount larger than 5 parts by weight, a concentration of the defoamer may be too high, thereby reducing the defoaming efficiency.

In addition, the (a) step in S110 may include: (a1) a step of adding the pigment particles to the organic binder solution; and (a2) a step of pulverizing the pigment particles to prepare the organic binder solution containing the pigment particles.

In addition, the (a) step in S110 may include: (a1') a step of pulverizing the pigment particles; and (a2') a step of adding the pulverized pigment particles to the organic binder solution to prepare the organic binder solution containing the pigment particles.

The method for pulverizing the pigment particles may employ any known pulverizing method to the skilled person to the art and is not particularly limited. In terms of process efficiency, a scheme of pulverizing the pigment particles contained in the organic binder solution into an appropriate size using milling equipment equipped with milling balls.

Next, the step (b) in S120 as described above is a step for preparing the substrate suspension by mixing the platelet-shaped substrates with the solvent, and then stirring and dispersing the mixture.

In this regard, as long as the platelet-shaped substrate is a plate-shaped substrate, the platelet-shaped substrate is not particularly limited thereto. The substrate including the plate-shaped material including at least one of synthetic mica, natural mica, glass flake, plate-shaped glass, plate-shaped iron oxide, plate-shaped alumina, plate-shaped silica, plate-shaped aluminum, and plate-shaped TiO₂ may be used as the platelet-shaped substrate.

The solvent may be an organic solvent known in the relevant technical field, and specifically, may include a hydrocarbon-based solvent such as hexane, octane, decane, isodecane, cyclohexane, methylcyclohexane, toluene, xylene, and ethylbenzene; an alcohol-based solvent such as methanol, ethanol, propanol, isopropanol, butanol, isobutanol, hexanol, benzyl alcohol, and cyclohexanol; a glycol-based solvent such as ethylene glycol, diethylene glycol, propylene glycol, dipropylene glycol, methyl cellosolve, ethyl cellosolve, butyl cellosolve, propylene glycol monomethyl ether, propylene glycol monoethyl ether, propylene glycol monopropyl ether, diglyme, triglyme, dipropylene glycol dimethyl ether, butyl carbitol, butyl triethylene glycol, methyl dipropylene glycol, methyl cellosolve acetate, propylene glycol monomethyl ether acetate, dipropylene glycol butyl ether acetate, diethylene glycol monobutyl ether acetate; an ether-based solvent such as diethyl ether, dipropyl ether, methylcyclopropyl ether, tetrahydrofuran, dioxane, and anisole; a ketone-based solvent such as methyl ethyl ketone, diethyl ketone, methyl isobutyl ketone, cyclohexanone, isophorone, and acetophenone; an ester-based solvent such as methyl acetate, ethyl acetate, butyl acetate, propyl acetate, methyl butyrate, ethyl butyrate, caprolactone, methyl lactate, and ethyl lactate; a halogenated solvent such as chloroform and dichloroethane; an amide-based solvent such as dimethylformamide, dimethylacetamide, 2-pyrrolidone, N-methylpyrrolidone, and caprolactam; dimethyl sulfoxide, sulfolane, tetramethyl urea, ethylene carbonate, propylene carbonate, and dimethyl carbonate. However, the type of the organic solvent used in the present disclosure is not particularly limited.

A stirring speed in the (b) step in S120 be maintained at 100 to 500 rpm. When the stirring speed is lower than 100 rpm, there is a problem that the dispersion effect is reduced and the pigment particles may coagulate. When the stirring speed is higher than 500 rpm, the dispersion efficiency may be further reduced.

Next, the step (c) in S130 is a step for mixing the substrate suspension and the organic binder solution with each other to coat the pigment particles on the surface of the platelet-shaped substrate.

When necessary, the method may further include, after the step (c), a step (d) of washing and dehydrating the platelet-shaped substrate; (e) a step of drying the washed platelet-shaped substrate; and (f) of screening the platelet-shaped substrate of a size larger than a predetermined size among the dried platelet-shaped substrates.

The drying step according to the step (e) may be performed at 60 to 180°C. When the drying temperature is lower than 60°C, the drying may take a long time, which may result in decreased productivity. When the drying temperature exceeds 180°C, the pigment particles may be damaged such that the characteristics thereof may decrease after the drying.

In the screening step according to the step (f), the platelet-shaped substrate having a particle size exceeding 100 µm may be removed. Furthermore, the step (f) may be performed to remove the agglomeration of the particles formed during the reaction. A screening scheme in the screening step may be performed using a mesh having a preset size. The screening scheme is not particularly limited.

### Example

Hereinafter, a configuration and an effect of the present disclosure will be described in more detail through a preferred example of the present disclosure. However, this is presented as a preferred embodiment of the present disclosure, and the present disclosure cannot be interpreted as being limited by this example in any sense.

Since the contents not described herein may be sufficiently technically inferred by a person skilled in the art, the descriptions thereof will be omitted.

### 1. Present Example 1

### (1) Preparation of organic binder solution

55 g of acrylic organic binder resin, 25 g of primary distilled water, 0.15 g of dispersant, and 0.4 g of defoamer were added into a 250 ml beaker, followed by stirring for more than 1 hour using a magnetic bar. A binder solution was mixed through the stirring, and then, 45 g of TiO₂ pigment particles were added thereto, followed by stirring for 1 hour using a magnetic bar. An average particle size of the TiO₂ pigment particles was in a range of 100 to 200 nm.

A high-purity TiO₂ organic binder solution prepared through the above process together with 150 g of ZrO₂ balls was added to a 500 ml PE bottle for ball milling, and then milling was performed thereon for 10 to 72 hours using a milling device.

### (2) Preparation of effect pigment

150g of plate-shaped mica substrates and 150g of ethanol were added to a 1L beaker, followed by stirring and dispersing at 150 rpm at 35 to 40°C to prepare the substrate suspension.

Next, 8.4g of the organic binder solution was added into the substrate suspension in a titrated manner using a pump.

Stirring was performed thereon for 30 minutes to complete a reaction, and washing and dehydration were performed thereon, and drying was performed thereon at 120°C for 30 minutes. The dried substrate was screened using a mesh, and the substrates of a size larger than a predetermined size were removed or aggregation of particles formed during the reaction was removed.

Through the above process, the effect pigment including the pigment particle layer composed of the TiO₂ particles to the surface of the platelet-shaped substrate was synthesized.

In the pigment according to Present Example 1, a content of the TiO₂ particles is 2 wt% with respect to a total weight of the pigment.

### 2. Present Example 2

The effect pigment according to Present Example 2 was prepared in the same manner as in Present Example 1, except that the content of TiO₂ particles was 5 wt% based on 100 wt% of the pigment in Present Example 2.

### 3. Present Example 3

The effect pigment according to Present Example 3 was prepared in the same manner as in Present Example 1, except that the content of TiO₂ particles was 10 wt% based on 100 wt% of the pigment in Present Example 3.

### 4. Present Example 4

The effect pigment according to Present Example 4 was prepared in the same manner as in Present Example 1, except that the content of TiO₂ particles was 15 wt% based on 100 wt% of the pigment in Present Example 4.

### 5. Comparative Example

Commercially available four types of effect pigments purchased from CQV Co., Ltd. were prepared as four Comparative Examples.

All four types of effect pigments as set forth below have a uniform TiO₂ coating layer on the platelet-shaped substrate.

### Comparative Example 1: Adamas AE-901K-SP

### Comparative Example 2: R901S

### Comparative Example 3: A-801K-OP

### Comparative Example 4: Adamas AE-901K-OP

### Evaluation of physical properties of Examples

### 1. Observation of pigment surface

The surfaces of the effect pigments according to Present Examples 1 and 2 prepared with the above-described scheme were observed using a scanning electron microscope. The surfaces of the effect pigments according to Present Examples 1 and 2 are shown in FIGS. 1 and 2, respectively.

Referring to FIGS. 1 and 2, it may be identified that the effect pigment according to the present disclosure has the TiO₂ particles coated on the surface of the platelet-shaped substrate in an island manner.

### 2. Analysis of standard deviation of hue values

The hue values of the pigment according to each of Present Examples and Comparative Examples were respectively measured at -15°, 15°, 25°, 45°, 75°, and 110°, and the standard deviation of the hue values was calculated.

The sample of each of Present Examples 1 to 4 and Comparative Examples 1 to 4 and the resin for film formation (product name: NA Clear) were mixed with each other in a ratio of 6:94 and the mixture was dispersed to prepare a paint. Then, the paint was drawn down using a paint machine and dried at room temperature to prepare a specimen.

A color difference value of each specimen was then analyzed 10 times using a colorimeter (BYK MAC i) and an average value thereof was calculated to obtain the hue value.

**Table 1**

| Examples | Hue | | | | | |
|---|---|---|---|---|---|---|
| | -15° | 15° | 25° | 45° | 75° | 110° |
| Present Example 1 | 253.6 | 248.07 | 249.75 | 247.73 | 255.48 | 258.2 |
| Present Example 2 | 256.61 | 252.98 | 250.6 | 246.68 | 253.07 | 255.3 |
| Present Example 3 | 245.93 | 243.11 | 242.1 | 242.36 | 252.5 | 255.8 |
| Present Example 4 | 250.69 | 257.66 | 256.06 | 244.93 | 247.92 | 251.47 |
| Comparative Example 1 | 235.84 | 226.93 | 232.68 | 244.53 | 257.13 | 260.5 |
| Comparative Example 2 | 245.69 | 228.21 | 245.12 | 260.56 | 266.45 | 267.43 |
| Comparative Example 3 | 237.41 | 229.17 | 236.97 | 246.39 | 256.32 | 259.88 |
| Comparative Example 4 | 241.79 | 234.55 | 234.7 | 244.73 | 257.28 | 260.38 |

**Table 2**

| Examples | Standard deviation of hue values |
|---|---|
| Present Example 1 | 4.3 |
| Present Example 2 | 3.5 |
| Present Example 3 | 5.8 |
| Present Example 4 | 4.8 |
| Comparative Example 1 | 13.6 |
| Comparative Example 2 | 15.3 |
| Comparative Example 3 | 12.0 |
| Comparative Example 4 | 11.1 |

Referring to Table 1 and Table 2, it may be identified that the effect pigment according to the present disclosure has the standard deviation of hue values at -15°, 15°, 25°, 45°, 75°, and 110° in a range smaller than 10.

Accordingly, it may be identified that the effect pigment according to the present disclosure realizes substantially the same color at different viewing angles because the standard deviation of the hue values respectively measured at different viewing angles is small.

However, it may be identified that the pigment of Comparative Example 1, which does not have a coating layer composed of the attached pigment particles has a standard deviation of the hue values at -15°, 15°, 25°, 45°, 75°, and 110° in a range larger than 10.

The effect pigment according to each of Comparative Examples 1 to 4 realizes different colors at different viewing angles because the standard deviation of the hue values measured at different viewing angles is large.

Although the embodiments of the present disclosure have been described above with reference to the accompanying drawings, the present disclosure may not be limited to the embodiments and may be implemented in various different forms. Those of ordinary skill in the technical field to which the present disclosure belongs will be able to appreciate that the present disclosure may be implemented in other specific forms without changing the technical idea or essential features of the present disclosure. Therefore, it should be understood that the embodiments as described above are not restrictive but illustrative in all respects.

## Claims

1. An effect pigment comprising:
a platelet-shaped substrate; and
a pigment particle layer composed of pigment particles attached to at least a portion of a surface of the platelet-shaped substrate,
wherein the pigment particles of the pigment particle layer are discontinuously positioned on the surface of the platelet-shaped substrate in an island manner.

2. The effect pigment of claim 1, wherein the pigment particle includes at least one of a metal oxide, ZnS, and BaSO₄.

3. The effect pigment of claim 2, wherein the metal oxide includes TiO₂.

4. The effect pigment of claim 1, wherein the platelet-shaped substrate is made of a plate-shaped material including at least one of synthetic mica, natural mica, glass flake, plate-shaped glass, plate-shaped iron oxide, plate-shaped alumina, plate-shaped silica, plate-shaped aluminum, and plate-shaped TiO₂.

5. The effect pigment of claim 1, wherein a content of the pigment particles is in a range of 1 to 20 wt% based on 100 wt% of a total weight of the effect pigment.

6. The effect pigment of claim 1, wherein a standard deviation of hue values respectively measured at -15°, 15°, 25°, 45°, 75°, and 110° is 10 or smaller.

7. A method for preparing an effect pigment, the method comprising:
(a) a step of preparing an organic binder solution containing pigment particles;
(b) a step of mixing platelet-shaped substrates with a solvent to prepare a mixture and then stirring and dispersing the mixture to prepare a substrate suspension; and
(c) a step of mixing the substrate suspension and the organic binder solution with each other to coat the pigment particles on a surface of the platelet-shaped substrates.

8. The method of claim 7, wherein the step (a) includes:
(a1) a step of adding the pigment particles to the organic binder solution; and
(a2) a step of pulverizing the pigment particles to prepare the organic binder solution containing the pulverized pigment particles.

9. The method of claim 7, wherein the step (a) includes:
(a1') a step of pulverizing the pigment particles; and
(a2') a step of adding the pulverized pigment particles into the organic binder solution to prepare the organic binder solution containing the pulverized pigment particles.

10. The method of claim 7, wherein the organic binder solution further contains a dispersant and a defoamer.

11. The method of claim 7, wherein the pigment particle includes at least one of a metal oxide, ZnS, and BaSO₄.

12. The method of claim 11, wherein the metal oxide includes TiO₂.

13. The method of claim 7, wherein the platelet-shaped substrate is made of a plate-shaped material including at least one of synthetic mica, natural mica, glass flake, plate-shaped glass, plate-shaped iron oxide, plate-shaped alumina, plate-shaped silica, plate-shaped aluminum, and plate-shaped TiO₂.

14. The method of claim 7, wherein the method further comprises, after step the (c),
(d) a step of washing and dehydrating the platelet-shaped substrates;
(e) a step of drying the washed platelet-shaped substrate; and
(f) a step of screening the substrates of a size larger than a predetermined size among the dried platelet-shaped substrates.

15. The method of claim 7, wherein the pigment particles are contained in an amount of 1 to 20 wt% based on 100 wt% of a total weight of the effect pigment.
